# FASCICULE DE BREVET EUROPEEN

(11) **EP 4 399 385 B1**
(45) Date de publication et mention de la délivrance du brevet: **19.03.2025**
(21) Numéro de dépôt: 22789248.6
(22) Date de dépôt: 06.09.2022
(51) Int. Cl.: E21B 17/042, C10M 171/00, C10M 177/00, C10N 30/06, C10N 30/12, C10N 40/08, C10N 50/08, C10N 80/00, F16L 58/18, F16L 15/08

(54) **LUBRIFIANT SOLIDE POUR ZNNI SUR ÉLÉMENT FILETÉ TUBULAIRE**
FESTES SCHMIERMITTEL FÜR ZN-NI-BESCHICHTUNG AUF EINEM GEWINDEROHRELEMENT
SOLID LUBRICANT FOR ZN-NI COATING ON A THREADED TUBULAR ELEMENT

(30) Priorité: 07.09.2021 FR 2109366
(43) Date de publication de la demande: 17.07.2024
(73) Titulaire: Vallourec Oil and Gas France, 59620 Aulnoye-Aymeries (FR); NIPPON STEEL CORPORATION, Chiyoda-ku Tokyo 100-8071 (JP)
(72) Inventeur: BASKA, Philippe, 92190 MEUDON (FR); THOMAS, Marie, 92190 MEUDON (FR)
(74) Mandataire: Mbacke, Mactar
(86) Numéro de dépôt international: PCT/FR2022/051678
(87) Numéro de publication internationale: WO 2023/037069

(56) Documents cités:
- WO-A1-2006/104251
- WO-A1-2016/170031
- WO-A1-2016/170037
- US-A1- 2003 094 810

## Description

### Domaine technique

L'invention concerne les composants ou conduits en acier avec revêtements dans le domaine du pétrole et gaz, de l'énergie ou le stockage, pour une utilisation tel que l'exploitation de puits ou le transport d'hydrocarbures, le transport ou le stockage d'hydrogène, la géothermie ou la capture de carbone.

### Arrière-plan technologique

On entend ici par "composant" tout élément, accessoire ou conduit, utilisé pour forer ou exploiter un puits et comprenant au moins une connexion ou connecteur ou encore une extrémité filetée, et destiné à être assemblé par un filetage à un autre composant pour constituer avec cet autre composant un joint fileté. Le composant peut être par exemple un tube ou un élément fileté tubulaire de relativement grande longueur (notamment d'environ une dizaine de mètres de longueur), par exemple un tube, ou bien un manchon tubulaire de quelques dizaines de centimètres de longueur, ou encore un accessoire de ces éléments tubulaires (dispositif de suspension ou « hanger », pièce de changement de section ou « cross-over », vanne de sécurité, connecteur pour tige de forage ou « tool joint », « sub », et analogues).

Les composants ou éléments filetés tubulaires sont dotés d'extrémités filetées. Ces extrémités filetées sont complémentaires permettant le raccordement de deux éléments filetés tubulaires mâle (« Pin ») et femelle (« Box ») entre eux. Il y a donc une extrémité filetée mâle et une extrémité filetée femelle. Les extrémités filetées dites premium ou semi-premium comportent généralement au moins une surface de butée. Une première butée peut être formée par deux surfaces de deux extrémités filetées, orientées de façon sensiblement radiale, configurées de façon à être en contact l'une avec l'autre à l'issue du vissage des extrémités filetées entre elles ou lors de sollicitations de compression. Les butées ont généralement des angles négatifs par rapport à l'axe principal des connexions. On connaît également des butées intermédiaires sur des joints comportant au moins deux étages de filetage. Une portion filetée, une surface de butée ainsi qu'une surface d'étanchéité peuvent former un ensemble que l'on appelle une extrémité filetée. Il peut exister une extrémité filetée avec un filetage orienté vers l'extérieur du tube, c'est à dire une extrémité filetée mâle, et une extrémité filetée avec un filetage orienté vers l'intérieur du tube, c'est-à-dire une extrémité filetée femelle. Les éléments filetés tubulaires, de type cuvelage et complétion sont en acier et peuvent être fabriqués, sans limitation, conformément aux normes API spécification 5CT ou 5CRA pour les cuvelages et tubes standard. Par exemple, l'acier peut être l'un des grades L80, P110 ou Q125.

Les conditions d'utilisation de ces éléments filetés tubulaires engendrent différents types de charges. Lesdites charges ont été partiellement réduite, entre autres, en utilisant des films ou des graisses sur les parties sensibles de ces composants telles que les zones filetées, les zones de butée ou encore les surfaces d'étanchéité métal/métal. Les contraintes induites comprennent notamment les contraintes dues au maintien en stockage, nécessitant l'application de graisses de stockage (différentes des graisses d'appoint appliquées avant la mise en service). Cependant, d'autres solutions existent, consistant à utiliser des revêtements organiques. Ainsi, les opérations de vissages sont généralement réalisées sous une charge axiale élevée, par exemple à cause du poids d'un tube de plusieurs mètres de long à raccorder via l'extrémité filetée, éventuellement aggravé par un léger désalignement de l'axe des éléments filetés à raccorder. Ceci induit des risques de grippage dans les zones filetées et/ou dans les surfaces d'étanchéité métal/métal. Ainsi, les zones filetées ainsi que les surfaces d'étanchéité métal/métal sont couramment enduites de lubrifiants.

De plus, les éléments filetés tubulaires sont souvent stockées puis utilisées dans un environnement agressif. C'est le cas, par exemple, en situation « offshore » en présence d'un brouillard salin, ou en situation « onshore » en présence de sable, poussières et/ou autres polluants. Ainsi, il est nécessaire d'employer différents types de revêtements anti-corrosion sur les surfaces qui sont chargées lors du vissage, ce qui est le cas des zones filetées ou encore des zones en contact de serrage, mais également le cas des surfaces d'étanchéité métal/métal, de la portée et des butées.

Cependant, eu égard aux normes environnementales, il apparaît que l'utilisation de graisses conformes à la norme API RP 5A3 (American Petroleum Institute) ne constitue pas une solution à long terme, car de telles graisses sont amenées à être extrudées des composants tubulaires et rejetées dans l'environnement ou dans le puits, provoquant des blocages qui nécessitent des opérations de nettoyage particulières.

Une alternative aux graisses consiste à utiliser une première couche ou un dépôt sec et/ou solides. Ces dépôts métalliques qui peuvent être appliqué chimiquement ou électrochimiquement. En fonction de la nature du dépôt, celle-ci peut apporter une propriété anticorrosive et lubrifiante pour empêcher le grippage des connexions filetées tubulaires lors du vissage, et ce de manière plus durablement qu'une graisse appliquée et moins polluante du fait d'une meilleure solidité. Cependant il a été mis en évidence que ces dépôts peuvent être sujet eux-mêmes sujet à la corrosion, et donc éventuellement à de la délamination, dans un environnement agressif, par exemple en milieu humide, par vieillissement dudit dépôt, lors de sur-sollicitations de la connexion, lors de son exploitation dans un puit, ainsi que lors d'opérations de vissages et de dévissages répétées. Cette corrosion ou cette délamination est non souhaitée car peut impliquer à la fois un risque de fragilisation de la connexion ainsi qu'une perte d'étanchéité par la création d'un chemin de fuite lié à la corrosion du substrat en acier de l'élément fileté tubulaire. Une fuite peut provoquer des conséquences économiques, voire environnementales considérables, par exemple lorsqu'une fuite se produit dans un puits d'hydrocarbure lors de son exploitation.

Une solution de l'état de l'art divulguée par EP 3286288 est d'ajouter une couche de conversion de type passivation au chrome trivalent par-dessus un dépôt solide afin d'isoler ledit dépôt solide. Cependant la demanderesse a déterminé que cette couche de passivation n'assume pas de fonction de lubrification, ni ne permet d'améliorer les propriétés lubrifiantes d'une couche supérieure. Du fait de ce manque de capacité lubrifiante on a une perte d'efficacité au niveau des tests de vissage/dévissage avec un risque plus élevé de grippage et lignage de la connexion, ainsi qu'une augmentation non souhaitée du couple de vissage. Une augmentation du couple de vissage implique un risque de dépassement des capacités de la clé de vissage et implique une incapacité à visser la connexion et à assurer son étanchéité.

L'état de l'art WO2016170031 décrit un élément tubulaire pour le forage et/ou l'exploitation d'un puits d'hydrocarbures, et plus précisément l'extrémité filetée d'un élément de type. Ladite extrémité peut comprendre une première couche de Zinc-Nickel, une seconde couche de passivation et enfin une couche de lubrifiant.

L'état de l'art WO2001610425 décrit un joint fileté pour tubes en acier qui présente une résistance au grippage et une excellente étanchéité à l'air sans utiliser graisse composée .

On entend par lignage une rainure ou un griffage.

De manière générale, le dépôt d'une couche de conversion est réalisé par insertion de la surface d'intérêt dans un bain chimique pour lequel on contrôle les paramètres tel que la durée du dépôt, la composition et la température de la solution chimique.

L'invention permet de résoudre l'ensemble des problèmes précédemment cités. En particulier, l'invention propose d'améliorer et stabiliser la sous-couche ou dépôt solide, tout en présentant un traitement de conversion compatible avec les équipements actuels, une chimie ainsi qu'une gestion des bains facilement contrôlable.

Selon un mode de réalisation, l'invention fournit un élément fileté tubulaire pour le forage, l'exploitation des puits hydrocarbures, le transport de pétrole et de gaz, le transport ou le stockage d'hydrogène, la captation carbone ou la géothermie, comprenant un corps métallique et comprenant un corps métallique et au moins une extrémité filetée comprenant au moins une portion filetée, ladite extrémité filetée comprenant un revêtement multicouche sur au moins une portion de la surface de l'extrémité filetée caractérisé en ce que ledit revêtement multicouche comprend une première couche comprenant un revêtement solide comprenant du Zinc-Nickel électrodéposé sur ladite au moins une portion de la surface de l'extrémité filetée, une seconde couche de conversion de type oxalatation au-dessus de la première couche, une troisième couche comprenant une matrice polyuréthane ou époxy chargée en particules solides lubrifiantes au-dessus de la seconde couche.

Grâce à cette caractéristique, la première couche de dépôt solide comprenant du zinc-nickel confère des propriétés lubrifiantes améliorées, dont les effets sont préservés de la délamination, du lignage et du grippage. En effet, la seconde couche d'oxalatation agit sur la première couche comme un lubrifiant solide. Cette dernière permet de conférer à la couche de dépôt solide comprenant du Zn-Ni d'avoir un coefficient de friction beaucoup plus stable et durable. Ledit coefficient de friction obtenu pouvant être inférieur à 0.2. En effet, au-delà de 0.2 la demanderesse a constaté qu'il peut y avoir un risque de grippage. La seconde couche d'oxalatation permet également de conférer un effet de barrière isolante chimiquement ou mécaniquement pour la sous-couche ou première couche de dépôt solide comprenant du Zn-Ni. La seconde couche d'oxalatation amplifie les effets de la troisième couche lubrifiante. Cette dernière conférant un effet supplémentaire de lubrification augmentant ainsi les capacités de vissage d'une connexion.

De manière surprenante, la couche de conversion lorsqu'elle est de type oxalatation présente un aspect homogène sur la circonférence de la connexion, indépendamment des flux et des températures dans le bain. Ce qui permet d'identifier beaucoup plus facilement un problème de recouvrement. Par ailleurs la couche d'oxalatation permet une meilleure adhésion de l'ensemble du revêtement en condition humide et après vieillissement, soit une meilleure conservation des performances même après un long stockage.

Par ailleurs, l'utilisation d'acide oxalique est moins contraignante au regard de la réglementation en vigueur et n'est pas un produit classé CMR, c'est-à-dire n'est pas cancérogène, mutagène ou reprotoxique.

On entend par problème de recouvrement, un défaut de couverture de la sous-couche ou de la première couche de dépôt, c'est-à-dire des zones de la première couche non couverte par la couche d'oxalatation et visible à l'oeil nu.

Selon un mode de réalisation, l'élément fileté tubulaire a une seconde couche de conversion de type oxalatation qui peut comprendre de l'oxalate de nickel et/ou de l'oxalate de zinc.

Grâce à cette caractéristique, l'oxalate de nickel et l'oxalate de zinc permet de retarder le contact métal/métal et d'emmagasiner une partie de la dissipation d'énergie émis pendant le vissage de la connexion. De manière surprenante, il a été constaté que l'apport d'un oxalate de nickel permet d'améliorer la tenue en anti-corrosion de la couche de conversion.

Selon un mode de réalisation, l'élément fileté tubulaire a une seconde couche de conversion de type oxalatation pouvant comprendre 10 à 20 % de carbone, 35% à 50 % de zinc et 35 à 45 % d'oxygène, 0% à 35% de nickel.

Grâce à cette caractéristique, de manière surprenante il a été déterminé par la demanderesse que la couche d'oxalatation confère une meilleure tenue du matériau au revêtement multicouche.

Selon un mode de réalisation, le poids de couche de la seconde couche peut être comprise entre 0,1g/m² et 20g/m².

Grâce à cette caractéristique, il a été déterminé que l'endurance est proportionnelle au poids de couche, plus le poids de couche est grand plus on a de l'endurance.

En revanche lorsque le poids de couche dépasse un certain seuil, on se retrouve avec des problèmes de rupture cohésive dans la couche d'oxalatation. La couche finit par se briser d'elle-même lorsque soumise à des contraintes extérieures. Par conséquent, on aura des risques de délamination et d'écaillage à la fois pour la couche d'oxalatation qui entrainera avec elle la délamination de la troisième couche.

Selon un mode de réalisation la masse surfacique de la seconde couche peut être comprise entre 0,5g/m² et 10g/m². La demanderesse a déterminé que jusqu'à 10 g/m² on a un meilleur compromis entre bonne endurance et risque amoindri de rupture cohésive.

Selon un mode de réalisation, la porosité de la seconde couche peut être comprise entre 5% et 35%.

Selon un mode de réalisation, la porosité de la seconde couche peut être comprise entre 10% et 25%.

Grâce à cette caractéristique, la porosité permet d'améliorer la rétention et le revêtement de la couche supérieure grâce à un phénomène d'ancrage de la couche supérieure dans les espaces vides de la couche d'oxalatation.

Selon un mode de réalisation, l'épaisseur de la seconde couche peut être comprise entre 0,5µm et 30 µm.

Selon un mode de réalisation, l'épaisseur de la seconde couche peut être comprise entre 1 µm et 20 µm.

Grâce à cette caractéristique, la tenue du matériau du revêtement multicouche est améliorée. Lorsque l'épaisseur de la couche dépasse 30 µm des problèmes de rupture cohésive peuvent apparaître. Une couche inférieure à 0,5 µm peut être insuffisante et poser des problèmes de lubrification insuffisante.

Selon un mode de réalisation, la seconde couche peut comprendre une texture de type polyèdres microfissurés avec des arrêtes de 1 µm à 30 µm de largeur.

On entend par polyèdre microfissurés, une forme géométrique en 3 dimensions ayant des faces planes polygonales qui se regroupent selon des segments appelés arrêtes. Le nombre de faces et d'arrêtes est aléatoire, la longueur des arrêtes peut aller de 0,5µm à 30µm. La couche peut présenter des microfissures réparties de façon aléatoire. La largeur des fissures peut aller de 0,05 µm à 1 µm de large.

Grâce à cette caractéristique, une texture de type polyèdres microfissurés confère à la couche supérieure une capacité améliorée de rétention et d'accroche à la couche d'oxalatation.

Selon un mode de réalisation, l'invention est aussi un procédé de fabrication d'un élément fileté tubulaire comprenant les étapes suivantes :
- Une étape d'électrodéposition d'une couche de zinc-nickel sur une surface métallique d'une extrémité filetée
- Une étape de conversion de type oxalatation par immersion
- Une étape de recouvrement par une couche lubrifiante comprenant une matrice polyuréthane ou époxy chargée en particules solides lubrifiantes

Grâce à cette caractéristique, la réalisation du revêtement se fait sans altération visible de la couche de Zinc-nickel.

On entend par immersion, une technique de traitement en immergeant la surface dans un bain d'oxalatation.

Selon un mode de réalisation, l'étape de conversion de type oxalatation peut être réalisée à une température comprise entre 25°C et 90°C.

Grâce à cette caractéristique, il est possible d'utiliser les mêmes outils que ceux de la passivation, moins couteux à mettre en place et en matériau.

Selon un mode de réalisation, l'étape de conversion de type oxalatation peut comprendre l'utilisation d'un acide oxalique et la concentration dudit acide oxalique peut être comprise entre 1 g/L et 75 g/L.

Grace à cette caractéristique, on a une meilleure gestion et pilotage du poids de couche de la couche d'oxalatation. En effet, la réaction de conversion de surface est d'autant plus rapide que l'on se rapproche de 75 g/L.

Selon un mode de réalisation, l'étape de conversion de type oxalatation peut comprendre l'utilisation d'un acide oxalique associé à un additif choisi parmi un élément nitrate, chlorure, thiocyanate, ou thiosulfate ou plusieurs additifs en combinaison.

Grâce à cette caractéristique, un additif permet d'accélérer la réaction de conversion de surface, et ainsi d'arriver plus rapidement aux caractéristiques de poids de couche souhaité.

Le procédé de dépôt de la couche d'oxalatation peut être réalisé sur une fourchette de temps entre 30 secondes et 15 minutes. En effet, le temps a une influence sur la valeur de poids de couche. Ladite valeur est proportionnelle au temps d'immersion.

En dessous de 30 secondes le poids de couche sera insuffisant. Au-dessus de 15 minutes il n'y a plus d'évolution significative de la valeur de poids de couche.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

La figure 1 montre de façon schématique, selon une vue partielle en coupe longitudinale, un joint résultant de l'assemblage de deux éléments filetés tubulaires mâle et femelle selon l'invention.

La figure 2 montre de façon schématique, selon une vue en coupe longitudinale, une section du revêtement multicouche selon l'invention.

La figure 3 montre un graphique représentant l'évolution du couple de vissage à chaque fin de vissage pour différents types de revêtements sur des éléments filetés tubulaires, pour différentes connexions comprenant soit de l'oxalatation soit de la passivation.

La figure 4 montre un graphique représentant l'évolution du couple de vissage à chaque fin de vissage pour différents types de revêtements sur des éléments filetés tubulaires, pour une des connexions différentes de celle de la figure 3 et comprenant soit de l'oxalatation soit de la passivation.

La figure 5 montre un graphique représentant le nombre d'étapes requis lors d'un test BOWDEN en fonction du poids de couche pour différents types de conversion, particulièrement pour atteindre 0,2 de coefficient de friction par rapport au poids de couche.

La figure 6 montre une image prise par observation MEB (Microscope Electronique à Balayage), selon une vue en coupe longitudinale, d'un revêtement multicouche selon l'invention.

La figure 7 montre une image prise par observation MEB (Microscope Electronique à Balayage), selon une vue en coupe longitudinale, d'un revêtement multicouche selon l'état de l'art.

La figure 8 montre une image prise par observation MEB (Microscope Electronique à Balayage) selon une vue de dessus de la surface d'une couche de conversion de type oxalatation selon l'invention au grossissement x5000.

La figure 9 décrit une image prise par observation MEB (Microscope Electronique à Balayage) selon une vue en hauteur de la surface d'une couche de conversion de type oxalatation selon l'invention au grossissement x20000.

### Description des modes de réalisation

Dans la suite de la description, les termes « longitudinal », « transversal », « vertical », « avant », « arrière », « gauche » et « droit » sont définis selon un repère orthogonal usuel tel que représenté sur les dessins, qui comprend :

Un axe longitudinal X, horizontal et de gauche à droite des vues de coupe ;

Par ailleurs, dans la description et les revendications, les termes « extérieur » ou « intérieur » et les orientations « axial » et « radial » seront utilisés pour désigner, selon les définitions données dans la description, des éléments du joint fileté tubulaire. L'axe longitudinal X détermine l'orientation "axiale". L'orientation "radiale" est dirigée orthogonalement à l'axe longitudinal X.

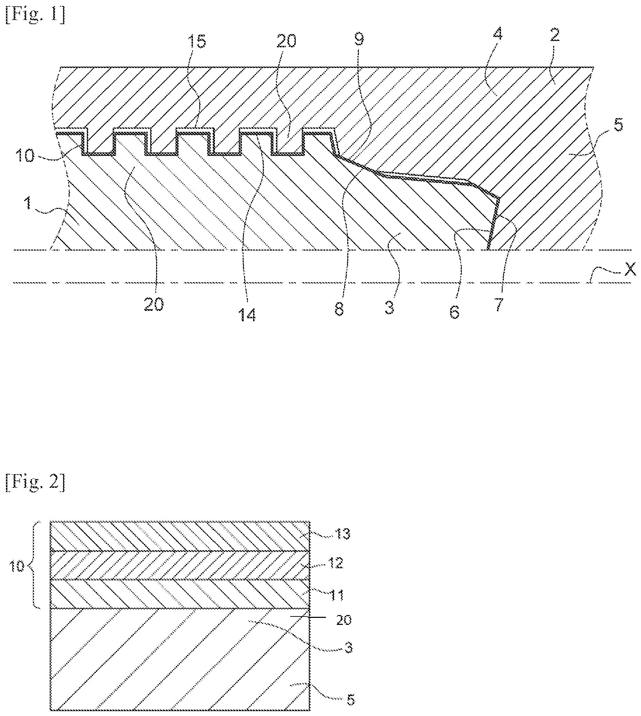

La figure 1 montre un joint ou une connexion, selon l'axe longitudinal X, d'un premier élément fileté tubulaire mâle (1) selon l'invention, comprenant un corps métallique (5) et une extrémité filetée mâle (3), ladite extrémité filetée mâle (3) comprenant une surface de butée mâle (6), une surface d'étanchéité mâle (8) et une portion filetée mâle (14), le premier élément fileté tubulaire mâle (1) étant représenté assemblé avec un second élément fileté tubulaire (2) selon l'invention, comprenant un corps métallique (5) et une extrémité filetée femelle (4), ladite extrémité filetée femelle (4) comprenant une surface de butée femelle (7), une surface d'étanchéité femelle (9), et une portion filetée femelle (15).

Chacune des extrémités filetées mâle (3) et femelle (4) sont constituées par un substrat métallique (20) et un revêtement multicouche (10) sur ce substrat métallique (20).

Les éléments filetés tubulaires (1, 2) sont représentés à l'état vissé mais l'invention n'exclut pas qu'ils peuvent se présenter à l'état unitaire non vissé.

Le revêtement multicouche (10) peut être sur l'une ou l'autre des extrémités filetées mâle (3) et femelle (4) ou encore sur les deux à la fois. En particulier ledit revêtement multicouche (10) peut être sur une surface de butée mâle (6) ou femelle (7), sur une surface d'étanchéité mâle (8) ou femelle (9), ou encore sur une portion filetée mâle (14) femelle (15), sur plusieurs de ces surfaces ou toutes ces surfaces. Concernant la figure 1, le revêtement multicouche (10) est sur l'extrémité filetée mâle (3).

La figure 2 montre une vue en coupe longitudinale, d'un revêtement multicouche (10) sur le substrat métallique (20) d'une extrémité filetée mâle (3). Cependant ledit revêtement (10) peut tout aussi bien être sur le substrat métallique d'une extrémité filetée femelle. Ainsi, l'ensemble des développements concernant le revêtement multicouche (10) sur extrémité filetée mâle (3) s'appliquent de manière analogue à un revêtement multicouche (10) sur extrémité filetée femelle.

En particulier, la figure montre le revêtement multicouche (10) comprenant une première couche (11) d'un revêtement solide comprenant du Zinc-Nickel électrodéposé sur la surface de l'extrémité filetée mâle (3), c'est-à-dire sur le substrat métallique (20) qui constitue ladite extrémité filetée mâle (3).

Ledit revêtement multicouche (10) comprend une seconde couche (12) de conversion de type oxalatation au-dessus de la première couche (11).

La seconde couche de conversion (12) de type oxalatation peut comprendre de l'oxalate de nickel et/ou de l'oxalate de zinc (non visible sur la figure). Ces deux éléments peuvent provenir de la couche d'oxalatation, par réaction entre l'acide oxalique et la couche de Zinc-nickel.

Enfin une troisième couche (13) lubrifiante comprenant une matrice polyuréthane ou époxy chargée en particules solides lubrifiantes est déposée au-dessus de la seconde couche (12). Les particules solides lubrifiantes sont sélectionnées, de manière non limitative, parmi le PTFE, du talc, oxyde de chrome, alumine.

Avantageusement, la première couche (11) de dépôt solide comprenant du zinc-nickel confère des propriétés lubrifiantes améliorées, dont les effets sont préservés de la délamination, du lignage et du grippage. En effet, la seconde couche d'oxalatation agit sur la première couche comme un lubrifiant solide. Cette dernière permet de conférer à la première couche de dépôt solide (11) comprenant du Zn-Ni d'avoir un coefficient de friction beaucoup plus stable et durable. Ledit coefficient de friction étant inférieur à 0.2. En effet, au-delà de 0.2 il y a un risque de grippage.

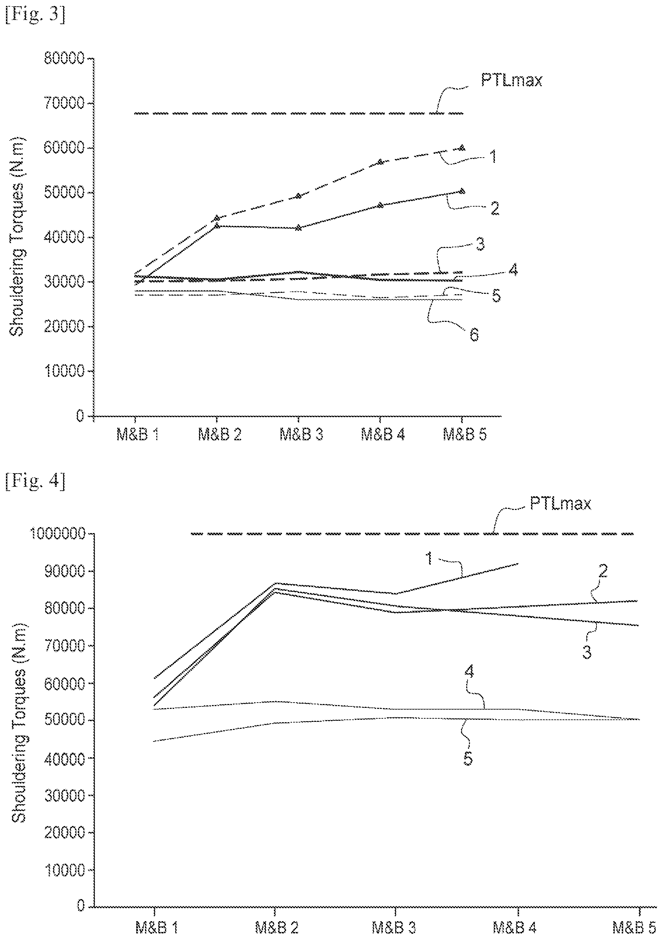

La demanderesse a en effet démontré par comparaison qu'on ne retrouvait pas cette stabilité et cette durabilité avec une couche de passivation (voir fig. 3 et fig. 4). La seconde couche (12) d'oxalatation permet également de conférer un effet de barrière isolante chimique ou mécanique pour la sous-couche ou première couche (11) de dépôt solide comprenant du Zn-Ni. La seconde couche (12) d'oxalatation amplifie les effets procurés par la troisième couche (13). Cette dernière conférant un effet supplémentaire de lubrification en synergie avec l'effet lubrifiant conféré par la seconde couche (12) augmentant ainsi les capacités de vissage d'une connexion (voir fig 3).

Par ailleurs, l'utilisation d'acide oxalique est moins contraignante au regard de la réglementation en vigueur et n'est pas classée CMR, c'est-à-dire n'est pas cancérogène, mutagène ou reprotoxique.

Avantageusement, la seconde couche d'oxalatation (12) comprend de l'oxalate de nickel et l'oxalate de zinc et permet de retarder le contact métal/métal et d'emmagasiner une partie de la dissipation d'énergie émise pendant le vissage de la connexion.

En effet, lors de l'écrasement du revêtement (10) sous l'action du vissage des extrémités filetées, les surfaces fonctionnelles des extrémités viennent en contact avec de très fortes pressions de contact. La seconde couche (12) va s'écraser en premier en subissant les effets de contraintes et de pressions avant la première couche (11) solide ce qui préserve ladite première couche (11) et améliore l'endurance globale du revêtement (10). De plus de manière surprenante, il a été constaté que l'apport d'un oxalate de nickel permet d'améliorer la tenue en anti-corrosion de la couche de conversion.

La figure 3 montre, de manière comparative, l'évolution du couple de vissage à chaque fin de vissage pour différents types de revêtements sur des éléments filetés tubulaires, soit selon l'état de l'art avec une couche de type passivation, soit selon l'invention avec une couche de type oxalatation. On entend par fin de vissage le moment où les deux butées d'un élément fileté tubulaire mâle et d'un élément fileté tubulaire femelle sont en contact lors d'un cycle de vissage/dévissage (M&B).

Une méthode utilisée pour s'assurer que les connexions sont assemblées correctement et déterminer le moment de fin de vissage consiste à surveiller le couple appliqué par une pince de serrage par rapport au nombre de tours. On entend par pince de serrage une clé autobloquante de grande capacité utilisée pour saisir les composants mâle et femelle de la connexion et appliquer un couple de serrage/desserrage. En connectant un ordinateur à la cellule de charge sur la pince et un compteur de tours électronique, un graphique peut être tracé montrant le couple sur l'axe vertical et le nombre de tour sur l'axe horizontal. En collectant chacune des fins de vissages effectués, on peut retracer un nouveau graphique tel que représenté par la figure 3.

La figure 3 montre également une ligne à trait discontinu située environ à 70 000 N.m qui représente le PLT, c'est-à-dire la capacité de la clé maximale. Lorsque la courbe s'approche de cette capacité de la clé maximale, ou l'atteint, il existe une grande probabilité pour que le grippage de la connexion ait lieu et de limiter le nombre de possibilité maximal de serrage/desserrage ou vissages/dévissages (M&B).

Toutes les connexions utilisées dans cette figure 3, sans tenir compte du revêtement, sont identiques, c'est-à-dire qu'ils correspondent à des éléments filetés tubulaires de type VAM ^{®} SLIJ-II. Ces types de tubes sont testés et validés selon la norme API RP 5C5:2017 CAL II.

Chaque courbe représente un revêtement comprenant une première couche de zinc-nickel électrodéposé, ainsi que d'une seconde couche de conversion de type passivation ou de type oxalatation selon l'invention et une troisième couche lubrifiante. On ne fait donc varier que la nature de la seconde couche de conversion d'une courbe à l'autre.

La courbe 1 et 2 représentent un revêtement comprenant une couche de passivation au chrome III. La présence de deux courbes correspond à deux tests de vissage avec un revêtement identique.

La courbe 3 et 4 représentent un revêtement comprenant une couche d'oxalatation pour laquelle on a utilisé un accélérateur au nitrate de fer durant la déposition de la couche. La présence de deux courbes correspond à deux tests de vissage avec un revêtement identique.

La courbe 5 et 6 représentent un revêtement comprenant une couche d'oxalatation sans accélérateur. La présence de deux courbes correspond à deux tests de vissage avec un revêtement identique.

La figure 3 montre que toutes les courbes représentatives de la passivation, à savoir les courbes 1 et 2 montrent un accroissement du couple pour chaque opération de vissage/dévissage et s'approchent dangereusement du PLT au fur et à mesure des tours de vissages/dévissages. L'inverse est constaté avec les courbes représentatives de l'oxalatation, à savoir les courbes 3, 4, 5 et 6. En effet, ces courbes sont sensiblement plates, traduisant des couples stables au fur et à mesure des opérations de vissages/dévissages. Bien que les courbes 3, 4, 5 et 6 montrent une stabilité jusqu'à 5 tours de vissages/dévissages, la demanderesse a pu démontrer que cette stabilité peut aller jusqu'à 15 tours de vissages/dévissages lorsque la seconde couche (12) est une couche d'oxalatation selon l'invention.

De plus il a été constaté pour les revêtements de la courbe 1 et 2, au fur et à mesure des tours de vissages/dévissages, l'apparition de grippage, de lignage au niveau des fonds de filets, du sommet de filets et la portée du filetage, et donc un endommagement de la couche de Zinc-nickel électrodéposé.

En ce qui concerne les revêtements de type oxalatation, il a été constaté par la demanderesse aucune forme de grippage, une absence d'endommagement de la première couche de zinc-nickel et la formation d'un tribofilm qui confère des effets de barrière isolante à l'ensemble du revêtement multicouche.

Les résultats de l'analyse comparative ne sont pas limités et demeurent valables pour tout type de tubes dans le domaine du pétrole et gaz, de l'énergie ou le stockage, pour une utilisation tel que l'exploitation de puits ou le transport d'hydrocarbures, le transport ou le stockage d'hydrogène, la géothermie ou la capture de carbone.

La figure 4 décrit de manière analogue à la figure 3, une comparaison de l'évolution du couple de vissage à chaque fin de vissage de la même manière que pour les tests de la figure 3, et pour différents types de revêtements, sur un autre type de connexion, à savoir VAM ^{®} SLIJ-III.

Les courbes 1, 2 et 3 correspondent à des extrémités filetées revêtues d'un revêtement comprenant une seconde couche de type passivation. Le revêtement se trouve sur l'ensemble de l'extrémité filetée, à savoir le filetage ou une portion filetée, la surface de butée et la portée d'étanchéité. Il y a 3 courbes car elles correspondent au nombre de test réalisé avec le même revêtement. Les courbes 4 et 5 correspondent à des extrémités filetées avec un revêtement multicouche selon l'invention comprenant une seconde couche de type oxalatation.

L'analyse comparative et les résultats qui en découlent sont similaires à ceux développés pour la figure 3.

Les courbes 1, 2, 3 montrent un accroissement du couple dès le deuxième vissage/dévissage. La courbe 1 montre une impossibilité de faire un cinquième vissage /dévissage pour le joint correspondant pour cause de grippage, alors que les courbes 4 et 5 montrent une stabilité du couple pour tous les vissages/dévissages

La demanderesse démontre que les conclusions des effets supérieurs en stabilité et en fiabilité de l'oxalatation selon l'invention par rapport à la passivation ne sont pas limitées au seul VAM ^{®} SLIJ-II et peuvent donc être transposables d'un type de connexion à un autre.

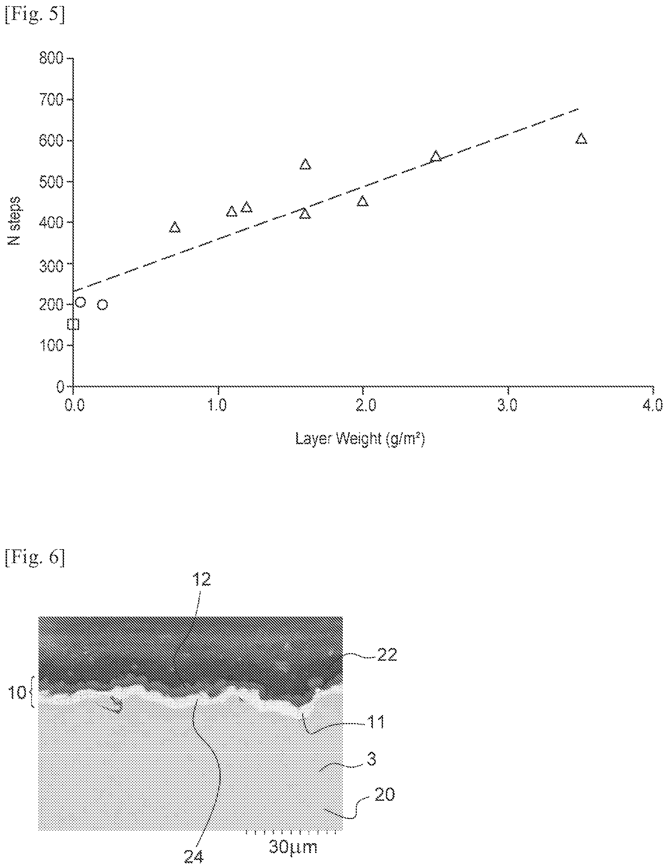

La figure 5 montre un graphique du nombre d'étapes requis, c'est-à-dire le nombre d'aller-retour d'une bille en acier, en fonction du poids de couche d'une seconde couche de conversion, lors d'un test BOWDEN pour atteindre 0,2 de coefficient de friction en fonction du type de revêtements.

Chaque échantillon testé a un revêtement qui comprend à l'identique au moins une première couche de Zn-Ni et une couche de lubrifiant, la variable entre les échantillons est la présence et/ou la nature seconde couche.

On retrouve une comparaison de 3 types de revêtements, à savoir un revêtement sans couche de conversion, c'est-à-dire ni passivation ni oxalatation, le poids de couche sera donc de 0 g/m² (représenté par un carré sur le graphique). Un revêtement avec une seconde couche de type passivation avec deux exemples de poids de couche fixé respectivement à 0,1 g/m² et 0,15 g/m² (représenté par un cercle sur le graphique). En effet, pour la passivation, il est difficile voire impossible de retrouver des valeurs de poids de couche supérieures à 0,2 g/m². Enfin un revêtement multicouche selon l'invention avec une seconde couche de type oxalatation (représenté par un triangle sur le graphique), de nombreux tests ont été réalisé avec ce type de revêtement avec différentes valeurs de poids de couche.

Lorsque deux pièces mobiles rugueuses sont en contact, un mécanisme d'usure peut conduire à un retrait du matériau avec génération de débris qui est la conséquence d'une déformation plastique. La valeur du coefficient de frottement dépend de la composition et de la structure de la surface, de sa rugosité et de ses propriétés mécaniques telles que la plasticité, la ductilité et la résistance superficielle aux contraintes de cisaillement. Dans le cas d'un revêtement sur une connexion, la valeur d'un coefficient de friction doit être inférieur à 0.2. En effet, au-delà de 0.2 il y a un risque de grippage.

Afin d'évaluer les propriétés lubrifiantes (coefficient de friction) de la surface du revêtement, un testeur de friction Bowden disponible dans le commerce (Shinko Engineering Co., Ltd.) a été utilisé. Dans le testeur de friction Bowden, une bille en acier (100CR6) a été déplacée d'avant en arrière en ligne droite sur un revêtement formé sur une tôle d'acier tandis qu'une charge était appliquée à la bille. Le coefficient de frottement a été mesuré à partir de la force de frottement et de la charge de pression à ce moment-là.

Une bille d'acier disponible dans le commerce en acier (100CR6) avec un diamètre extérieur de 10 mm (Amatsuji Steel Ball Manufacturing Co., Ltd.) préalablement dégraissée est utilisée comme bille d'acier dans le test de frottement Bowden.

La bille en acier est appliquée sur les revêtements évalués et déplacée avec une charge de pressage de 300 N.

La figure 5 montre que le revêtement sans couche de conversion atteint le seuil critique de 0,2 de friction avant d'atteindre 150 étapes.

Le revêtement avec passivation confère une lubrification sensiblement supérieure à celle d'une couche sans conversion et permet d'atteindre le seul critique de 0,2 de coefficient de friction à environ 200 étapes.

Le revêtement avec oxalatation confère une lubrification supérieure aux deux types de revêtements précédent avec une atteinte du seuil critique de 0,2 de coefficient de friction entre 400 et 600 étapes suivant la valeur du poids de couche. L'oxalatation permet donc de conférer à la couche de dépôt solide comprenant du Zn-Ni d'avoir un coefficient de friction beaucoup plus stable et durable.

En effet, la demanderesse a déterminé que la couche d'oxalate améliore précisément la déformation plastique du ZnNi sur sa surface même sous une pression de contact élevé améliorant la dislocation atomique, la rotation des grains et la stabilité du système avant l'écaillement de gros blocs et l'apparition de défauts à grande échelle.

Il a été observé que, même avec un poids de couche inférieur, les couches d'oxalate produisent un film lubrifiant plus durable, améliorant chimiquement ou physiquement l'efficacité de la lubrification.

Selon une variante de l'invention, le poids de couche de la seconde couche (12) est compris entre 0,1g/m² et 20g/m².

Selon une autre variante de l'invention, le poids de couche de la seconde couche (12) est compris entre 0,5g/m² et 10g/m².

Avantageusement, il a été déterminé que l'endurance est proportionnelle au poids de couche, plus le poids de couche est grand plus on a de l'endurance.

En revanche lorsque le poids de couche dépasse un certain seuil, on se retrouve avec des problèmes de rupture cohésive dans la couche d'oxalatation. La couche finit par se briser d'elle-même lorsque soumise à des contraintes extérieures. Par conséquent, on aura des risques de délamination et d'écaillage pour la couche d'oxalatation qui entrainera avec elle la délamination de la troisième couche lubrifiante. La demanderesse a déterminé que lorsque jusqu'à 10 g/m² on a un meilleur compromis entre une bonne endurance et un risque amoindri de rupture cohésive.

La figure 6 décrit une image prise par observation MEB (Microscope Electronique à Balayage), selon une vue en coupe longitudinale, d'un revêtement multicouche (10) selon l'invention, sur le substrat métallique (20) d'une extrémité filetée mâle (3).

Le revêtement multicouche (10) comprend une première couche (11) d'un revêtement solide comprenant du Zinc-Nickel électrodéposé. Ledit revêtement comprend également une couche de conversion de type oxalatation 12. La troisième couche lubrifiante comprenant une matrice polyuréthane ou époxy chargée en particules solides lubrifiantes n'est pas observable en l'état, et une résine d'enrobage (22) en plastique est employé pour la préparation de l'échantillon pour l'observation métallographique. Cette résine (22) n'a d'utilité que pour l'obtention de l'image de la figure 6 et ne fait donc pas partie de l'invention.

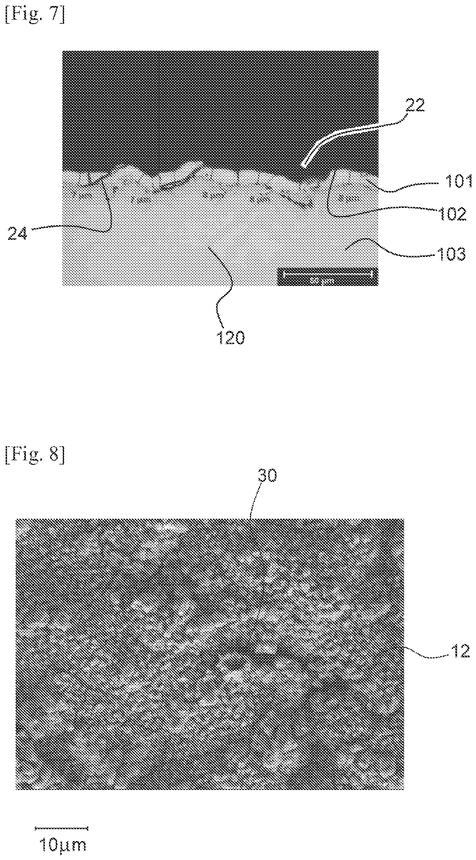

La figure 7 décrit une image prise par observation MEB (Microscope Electronique à Balayage), selon une vue en coupe longitudinale, d'un revêtement multicouche (100) comprenant une couche de passivation (102), selon l'état de l'art, sur le substrat métallique (120) d'une extrémité filetée mâle (103).

Le revêtement multicouche (100) comprend une première couche (101) d'un revêtement solide comprenant du Zinc-Nickel électrodéposé. Ledit revêtement comprend également une couche de conversion de type passivation (102). La troisième couche lubrifiante comprenant une matrice polyuréthane ou époxy chargée en particules solides lubrifiantes n'est pas observable en l'état, et une résine d'enrobage (22) en plastique est employé pour la préparation de l'échantillon pour l'observation métallographique. Cette résine (22) n'a d'utilité que pour l'obtention de l'image de la figure 7.

L'observation dans la figure 6 montre une couche d'oxalatation épaisse et texturée qui mesure environ 5 µm. Cependant selon d'autres observations la couche d'oxalatation peut être comprise entre 0,5 µm et 30 µm, de préférence la couche peut être comprise entre 1 µm et 20 µm.

Par comparaison avec l'image de la figure 7 la seconde couche de conversion de type passivation, n'est tout simplement pas observable car celle-ci est inférieure à 100 nm.

Cette différence d'observation est importante dans la mesure où elle garantit un minimum d'épaisseur pour l'oxalatation et qui demeure visible. Par comparaison, on ne retrouve pas cette visibilité avec la passivation de la figure 7. Cette épaisseur présente des avantages, tel que permettre une meilleure tenue du matériau. En effet, d'un côté une épaisseur qui dépasse un certain seuil, notamment de 30 µm peut poser des problèmes de rupture cohésive. De l'autre côté, une couche inférieure à 0,5 µm ou 500 nm est insuffisante et posera nécessairement des problèmes de lubrification insuffisante.

Une rupture cohésive est un effet indésirable qui peut dégrader voire éliminer l'effet de la seconde couche, la première couche de zinc-nickel devenant vulnérable à l'environnement et aux contraintes induites.

En ce qui concerne les fissures (24) et autres craquements observés dans la couche de Zinc-Nickel sur la figure 6 et 7, elles sont issues par la préparation des échantillons pour les besoins de l'observation métallographique.

Avantageusement, la demanderesse a également déterminé que l'épaisseur de la seconde couche d'oxalatation a un effet de type barrière isolante pour la première couche solide de Zinc-Nickel.

La figure 6 montre également une porosité de la seconde couche (12) d'oxalatation, ladite porosité de la seconde couche (12) peut être comprise entre 5% et 35%.

Selon une variante de l'invention, la seconde couche (12) peut être comprise entre 10% et 25%.

On entend par la porosité de la seconde couche, des espacements vides entre la base des cristaux, ces derniers pouvant recouvrir ladite porosité au niveau de leur hauteur. On parle également de porosité ouverte quand on a des fissures qui présentent un chemin direct entre la couche de Zinc-Nickel et la troisième couche comprenant une matrice polyuréthane ou époxy chargée en particules solides lubrifiantes.

Avantageusement, la porosité permet d'améliorer la rétention de la couche supérieure du revêtement multicouche grâce à un phénomène d'ancrage mécanique de la couche supérieure dans les espaces vides de la couche d'oxalatation.

Par comparaison avec la figure 7, on ne retrouvera pas cette porosité pour une seconde couche de conversion de type passivation selon l'état de l'art. En effet, la demanderesse a déterminé qu'une couche de passivation est beaucoup trop fine pour admettre une quelconque porosité.

La figure 8 décrit une image prise par observation MEB (Microscope Electronique à Balayage) selon une vue en hauteur de la surface d'une couche de conversion (12) de type oxalatation avec un grossissement x5000.

On observe notamment que la surface de la couche est texturée par des polyèdres microfissurés (30).

On entend par polyèdre microfissurés, une forme géométrique en 3 dimensions ayant des faces planes polygonales qui se regroupent selon des segments appelés arrêtes. Le nombre de faces et d'arrêtes est aléatoire, la longueur des arrêtes peut aller de 0,5 µm à 30 µm. La couche peut présenter des microfissures réparties de façon aléatoire. La largeur des fissures peut aller de 0,05 µm à 1 µm de large. Grâce à cette caractéristique, une texture de type polyèdres microfissurés confère une capacité de rétention et d'accroche à la couche d'oxalatation pour la couche supérieure.

Selon une variante de l'invention, la seconde couche (12) peut être réalisée avec un accélérateur qui a pour effet d'accentuer l'homogénéisation de l'oxalatation, et d'obtenir ainsi une couche plus fine et plus dense.

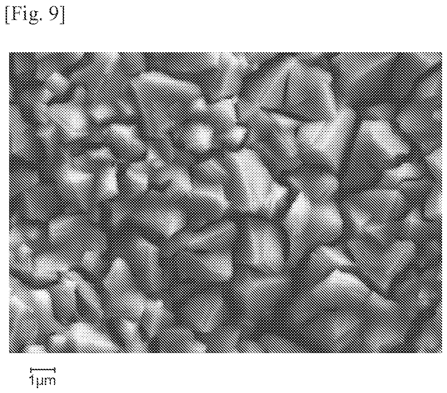

La figure 9 décrit une image prise par observation MEB (Microscope Electronique à Balayage) selon une vue en hauteur de la surface d'une couche de conversion de type oxalatation selon l'invention au grossissement x20000.

Les développements de la figure 8 sont valables et applicables à la figure 9.

## Revendications

1. Elément fileté tubulaire (1, 2) pour le forage, l'exploitation des puits hydrocarbures, le transport de pétrole et de gaz, le transport ou le stockage d'hydrogène, la captation carbone ou la géothermie, comprenant un corps métallique (5) et au moins une extrémité filetée (3, 4) comprenant au moins une portion filetée (14,15), ladite extrémité filetée (3, 4) comprenant un revêtement multicouche (10) sur au moins une portion de la surface de l'extrémité filetée (3,4) **caractérisé en ce que** ledit revêtement multicouche (10) comprend une première couche (11) comprenant un revêtement solide comprenant du Zinc-Nickel électrodéposé sur ladite au moins une portion de la surface de l'extrémité filetée (3, 4), une seconde couche (12) de conversion de type oxalatation au-dessus de la première couche (11), une troisième couche (13) comprenant une matrice polyuréthane ou époxy chargée en particules solides lubrifiantes au-dessus de la seconde couche (12).

2. Elément fileté tubulaire (1, 2) selon la revendication 1, **caractérisé en ce que** la seconde couche (12) de conversion de type oxalatation comprend de l'oxalate de nickel et/ou de l'oxalate de zinc.

3. Elément fileté tubulaire (1, 2) selon l'une quelconque des revendications précédentes, **caractérisé en ce que** la seconde couche (12) a un poids de couche par unité de surface compris entre 0,1g/m² et 20g/m².

4. Elément fileté tubulaire (1, 2) selon la revendication 3, **caractérisé en ce que** la seconde couche (12) a un poids de couche par unité de surface de la seconde couche (12) compris entre 0,5g/m² et 10g/m².

5. Elément fileté tubulaire (1, 2) selon l'une quelconque des revendications précédentes, **caractérisé en ce que** la seconde couche (12) a une porosité comprise entre 5% et 35%.

6. Elément fileté tubulaire (1, 2) selon la revendication 5, **caractérisé en ce que** la porosité de la seconde couche (12) est comprise entre 10% et 25%.

7. Elément fileté tubulaire (1, 2) selon l'une quelconque des revendications précédentes, **caractérisé en ce que** la seconde couche (12) a une épaisseur comprise entre 0,5µm et 30 µm.

8. Elément fileté tubulaire (1, 2) selon la revendication 7, **caractérisé en ce que** l'épaisseur de la seconde couche (12) est comprise entre 1 µm et 20 µm.

9. Elément fileté tubulaire (1, 2) selon l'une quelconque des revendications précédentes, **caractérisé en ce que** la seconde couche (12) comprend une texture de type polyèdres microfissurés avec des arrêtes de 1 µm à 30 µm de largeur.

10. Elément fileté tubulaire (1, 2) selon l'une quelconque des revendications précédentes, dans lequel l'extrémité filetée (3, 4) comprend en outre au moins une surface de butée (6, 7) et au moins une surface d'étanchéité (8,9), **caractérisé en ce que** le revêtement multicouche (10) recouvre ladite au moins surface de butée (6,7) et/ou ladite au moins surface d'étanchéité (8,9).

11. Procédé de fabrication d'un élément fileté tubulaire (1, 2) selon l'une des revendications 1 à 9 **caractérisé en ce qu'**il comprend :
- Une étape d'électrodéposition d'une couche de zinc-nickel sur une surface métallique d'une extrémité filetée (3, 4)
- Une étape de conversion de type oxalatation
- Une étape de recouvrement par une couche comprenant une matrice polyuréthane ou époxy chargée en particules solides lubrifiantes.

12. Procédé de fabrication d'un élément fileté tubulaire (1, 2) selon la revendication 11, **caractérisé en ce que** l'étape de conversion de type oxalatation est réalisée à une température comprise entre 25°C et 90°C,

13. Procédé de fabrication d'un élément fileté tubulaire (1) selon l'une quelconque des revendications 11 ou 12, **caractérisé en ce que** l'étape de conversion de type oxalatation comprend l'utilisation d'un acide oxalique et que la concentration dudit acide oxalique est comprise entre 1 g/L et 75 g/L.

14. Procédé de fabrication d'un élément fileté tubulaire (1, 2) selon l'une quelconque des revendications 11 à 13, caractérisé en ce l'étape de conversion de type oxalatation comprend l'utilisation d'un acide oxalique associé à un additif choisi parmi un élément nitrate, chlorure, thiocyanate, ou thiosulfate ou plusieurs additifs en combinaison.

## Patentansprüche

1. Gewinderohrelement (1, 2) für das Bohren, das Erschließen von Kohlenwasserstoffbohrlöchern, den Transport von Erdöl und Gas, den Transport oder die Speicherung von Wasserstoff, das Abscheiden von Kohlenstoff oder die Geothermie, umfassend einen metallischen Körper (5) und mindestens ein Gewindeende (3, 4), das mindestens einen Gewindeabschnitt (14, 15) umfasst, wobei das Gewindeende (3, 4) einen mehrschichtigen Überzug (10) auf mindestens einem Abschnitt der Fläche des Gewindeendes (3, 4) umfasst, **dadurch gekennzeichnet, dass** der mehrschichtige Überzug (10) eine erste Schicht (11), die einen festen Überzug umfasst, der elektrolytisch auf den mindestens einen Abschnitt der Fläche des Gewindeendes (3, 4) abgeschiedenes Zink-Nickel umfasst, eine zweite Konversionsschicht (12) vom Oxalationstyp über der ersten Schicht (11), eine dritte Schicht (13), die eine Polyurethan- oder Epoxidmatrix umfasst, die mit schmierenden festen Partikeln gefüllt ist, über der zweiten Schicht (12) umfasst.

2. Gewinderohrelement (1, 2) nach Anspruch 1, **dadurch gekennzeichnet, dass** die zweite Konversionsschicht (12) vom Oxalationstyp Nickeloxalat und/oder Zinkoxalat umfasst.

3. Gewinderohrelement (1, 2) nach einem der vorhergehenden Ansprüche, **dadurch gekennzeichnet, dass** die zweite Schicht (12) ein Schichtgewicht je Flächeneinheit zwischen 0,1 g/m² und 20 g/m² aufweist.

4. Gewinderohrelement (1, 2) nach Anspruch 3, **dadurch gekennzeichnet, dass** die zweite Schicht (12) ein Schichtgewicht je Flächeneinheit der zweiten Schicht (12) zwischen 0,5 g/m² und 10 g/m² aufweist.

5. Gewinderohrelement (1, 2) nach einem der vorhergehenden Ansprüche, **dadurch gekennzeichnet, dass** die zweite Schicht (12) eine Porosität zwischen 5 % und 35 % aufweist.

6. Gewinderohrelement (1, 2) nach Anspruch 5, **dadurch gekennzeichnet, dass** die Porosität der zweiten Schicht (12) zwischen 10 % und 25 % beträgt.

7. Gewinderohrelement (1, 2) nach einem der vorhergehenden Ansprüche, **dadurch gekennzeichnet, dass** die zweite Schicht (12) eine Dicke zwischen 0,5 µm und 30 µm aufweist.

8. Gewinderohrelement (1, 2) nach Anspruch 7, **dadurch gekennzeichnet, dass** die Dicke der zweiten Schicht (12) zwischen 1 µm und 20 µm beträgt.

9. Gewinderohrelement (1, 2) nach einem der vorhergehenden Ansprüche, **dadurch gekennzeichnet, dass** die zweite Schicht (12) eine Textur vom Typ mikrorissiger Polyeder mit Kanten von 1 µm bis 30 µm Breite umfasst.

10. Gewinderohrelement (1, 2) nach einem der vorhergehenden Ansprüche, wobei das Gewindeende (3, 4) ferner mindestens eine Anschlagfläche (6, 7) und mindestens eine Dichtfläche (8, 9) umfasst, **dadurch gekennzeichnet, dass** der mehrschichtige Überzug (10) die mindestens eine Anschlagfläche (6, 7) und/oder die mindestens eine Dichtfläche (8, 9) überzieht.

11. Verfahren zur Herstellung eines Gewinderohrelements (1, 2) nach einem der Ansprüche 1 bis 9, **dadurch gekennzeichnet, dass** es umfasst:
- Einen Schritt des elektrolytischen Abscheidens einer Zink-Nickel-Schicht auf einer metallischen Oberfläche eines Gewindeendes (3, 4)
- Ein Konversionsschritt vom Oxalationstyp
- Einen Schritt des Beschichtens mit einer Schicht, die eine Polyurethan- oder Epoxidmatrix umfasst, die mit schmierenden festen Partikeln gefüllt ist.

12. Verfahren zur Herstellung eines Gewinderohrelements (1, 2) nach Anspruch 11, **dadurch gekennzeichnet, dass** der Konversionsschritt vom Oxalationstyp bei einer Temperatur zwischen 25 °C und 90 °C ausgeführt wird.

13. Verfahren zur Herstellung eines Rohrgewindeelements (1) nach einem der Ansprüche 11 oder 12, **dadurch gekennzeichnet, dass** der Konversionsschritt vom Oxalationstyp die Verwendung einer Oxalsäure umfasst und dass die Konzentration der Oxalsäure zwischen 1 g/L und 75 g/L beträgt.

14. Verfahren zur Herstellung eines Rohrgewindeelements (1, 2) nach einem der Ansprüche 11 bis 13, **dadurch gekennzeichnet, dass** der Konversionsschritt vom Oxalationstyp die Verwendung einer Oxalsäure in Verbindung mit einem Zusatzstoff, der aus einem Nitrat-, Chlorid-, Thiocyanat- oder Thiosulfatelement ausgewählt ist, oder mehreren Zusatzstoffen in Kombination umfasst.

## Claims

1. A tubular threaded element (1, 2) for the drilling, the operation of hydrocarbon wells, the transport of oil and gas, the transport or the storage of hydrogen, the carbon capture or the geothermal energy, comprising a metal body (5) and at least one threaded end (3, 4) comprising at least one threaded portion (14, 15), said threaded end (3, 4) comprising a multilayer coating (10) on at least one portion of the surface of the threaded end (3, 4) **characterised in that** said multilayer coating (10) comprises a first layer (11) comprising a solid coating comprising Zinc-Nickel electrodeposited on said at least one portion of the surface of the threaded end (3, 4), a second oxalation-type conversion layer (12) above the first layer (11), a third layer (13) comprising a polyurethane or epoxy matrix loaded with solid lubricant particles above the second layer (12).

2. The tubular threaded element (1, 2) according to claim 1, **characterised in that** the second oxalation-type conversion layer (12) comprises nickel oxalate and/or zinc oxalate.

3. The tubular threaded element (1, 2) according to any one of the preceding claims, **characterised in that** the second layer (12) has a layer weight per unit area comprised between 0.1g/m² and 20g/ m².

4. The tubular threaded element (1, 2) according to claim 3, **characterised in that** the second layer (12) has a layer weight per unit area of the second layer (12) comprised between 0.5g/m² and 10g/m².

5. The tubular threaded element (1, 2) according to any one of the preceding claims, **characterised in that** the second layer (12) has a porosity comprised between 5% and 35%.

6. The tubular threaded element (1, 2) according to claim 5, **characterised in that** the porosity of the second layer (12) is comprised between 10% and 25%.

7. The tubular threaded element (1, 2) according to any one of the preceding claims, **characterised in that** the second layer (12) has a thickness comprised between 0.5 µm and 30 µm.

8. The tubular threaded element (1, 2) according to claim 7, **characterised in that** the thickness of the second layer (12) is comprised between 1 µm and 20 µm.

9. The tubular threaded element (1, 2) according to any one of the preceding claims, **characterised in that** the second layer (12) comprises a microcracked polyhedron type texture with edges of 1 µm to 30 µm width.

10. The tubular threaded element (1, 2) according to any one of the preceding claims, wherein the threaded end (3, 4) further comprises at least one stop surface (6, 7) and at least one sealing surface (8, 9), **characterised in that** the multilayer coating (10) covers said at least one stop surface (6, 7) and/or said at least one sealing surface (8, 9).

11. A method for manufacturing a tubular threaded element (1, 2) according to one of claims 1 to 9, **characterised in that** it comprises:
- A step of electrodepositing a zinc-nickel layer on a metal surface of a threaded end (3, 4)
- An oxalation-type conversion step
- A step of covering with a layer comprising a polyurethane or epoxy matrix loaded with solid lubricant particles.

12. The method for manufacturing a tubular threaded element (1, 2) according to claim 11, **characterised in that** the oxalation-type conversion step is carried out at a temperature comprised between 25°C and 90°C,

13. The method for manufacturing a tubular threaded element (1) according to any one of claims 11 to 12, **characterised in that** the oxalation-type conversion step comprises the use of an oxalic acid and that the concentration of said oxalic acid is comprised between 1 g/L and 75 g/L.

14. The method for manufacturing a tubular threaded element (1, 2) according to any one of claims 11 to 13, **characterised in that** the oxalation-type conversion step comprises the use of an oxalic acid associated with an additive selected from a nitrate, chloride, thiocyanate or thiosulphate element or several additives in combination.
